# EUROPEAN PATENT APPLICATION

(11) **EP 1 285 591 A2**
(43) Date of publication of application: **26.02.2003**
(21) Application number: 02018218.4
(22) Date of filing: 20.08.2002
(51) Int. Cl.: A23L 3/10

(54) **Pressure heating apparatus**

(30) Priority: 20.08.2001 JP 2001249086
(71) Applicant: Takano, Motoharu, Tokyo (JP); Altech Co. Ltd, Tokyo (JP)
(72) Inventor: Takano, Motoharu, Tokyo (JP)
(74) Representative: Grünecker, Kinkeldey, Stockmair & Schwanhäusser Anwaltssozietät

(57) **Abstract**

Disclosed is a pressure heating apparatus which can surely prevent generation of cold spots inside the pressure vessel without using an excessive amount of steam and can shorten the required time necessary for pressurizing and heating. A circulation pipe for connecting a top side opening provided on the upper portion of a pressure vessel and a bottom side opening provided on the lower portion of the pressure vessel is provided outside the pressure vessel. A turbo blower is provided on a path of the circulation pipe and a steam supply pipe is connected thereto. Therefore, air inside the pressure vessel and steam supplied to the circulation pipe can be strongly agitated, thereby achieving uniformity of the temperature distributions and the steam density.

## Description

### BACKGROUND OF THE INVENTION

### 1. Field of the Invention

Present invention relates to improvements in pressure heating apparatuses which are preferably used for sterilization of foods or medical supplies within a retort pouch or after autoclave, or articles such as canned foods.

### 2. Description of the Related Art

As heating apparatuses used for sterilization and the like, boiling water circulation type sterilization apparatuses and hot water shower type sterilization apparatuses are already well known to those skilled in the art. However, both types require a large quantity of heat in order to obtain boiling water or hot water necessary for sterilization, which causes problems in respect to energy efficiency.

As apparatuses with no such problems, several steam type pressure heating apparatuses have been proposed in which heat sterilization is performed using steam under the pressurized condition. However, all the cases have such shortcomings that distributions of steam inside the pressure vessel is unstable, thereby generating cold spots. Therefore, articles to be sterilized are not uniformly heated.

Also, steam inside the pressure vessel is abruptly cooled and condensed when the article inside the pressure vessel is returned to a normal temperature by jetting cooling water after completing the sterilization by pressurizing and heating. As a result, there causes such a problem that damages like ruptures are generated on the outer films of retort pouches or outer films for autoclaves due to the drastic decrease in the atmospheric pressure inside the pressure vessel.

Furthermore, in order to uniform the steam distributions inside the pressure vessel, it is necessary for this kind of pressure heating apparatuses to have an air-blow step, that is, an operation for jetting the steam by letting out air from the pressure vessel in the time of starting a sterilization processing. However, it is necessary to supply a large amount of steam inside the pressure vessel in the air - blow step and, since the steam is not sufficiently utilized for heating the article, thermal energy is wasted and the total time required for pressurizing and heating is to be increased. In general, the time required for performing air-blow is about 10 minutes to 20 minutes. The capacity of steam necessary in the step is approximately 50 % of the capacity of the steam used in the whole step including the pressure-heat sterilization.

As techniques for uniforming the steam distributions inside a pressure vessel in a steam type pressure heating apparatus, for example, a apparatus in which a number of fans are provided horizontally in a zigzag arrangement on the inner side of the opposing side walls inside the pressure vessel is disclosed in Japanese Patent Application laid-open Hei 2 - 107173, and Japanese Utility Model Application laid-open Sho 57-37807 discloses a apparatus in which a duct type forced blasting path is formed inside the pressure vessel along the longitudinal direction of the pressure vessel and by driving a fan provided on one end of the forced blasting path, steam and air inside the pressure vessel is to be forcedly agitated. However, in either case, the agitation ability of the fans is not necessarily sufficient and in order to prevent generation of cold spots, it is necessary provide a space in between to place retort pouches, package for autoclave, or canned foods to be sterilized. As a result, the storing efficiency is deteriorated.

### SUMMARY OF THE INVENTION

The invention has been designed to overcome the foregoing problems of the related art. An object of the invention is to surely prevent generation of cold spots inside a pressure vessel without using excessive steam and, at the same time, to provide a pressure heating apparatus in which time required for pressurizing and heating can be shortened.

Present invention is a pressure heating apparatus for pressurizing and heating an article by filling a pressure vessel with steam containing a latent heat. In order to achieve the aforementioned object, the apparatus specifically comprises a circulation pipe being provided outside the pressure vessel for connecting a top side opening provided on the upper portion of the pressure vessel and a bottom side opening provided on the lower portion of the pressure vessel; and on a path of the circulation pipe, a turbo blower for circulating fluid inside the pressure vessel and fluid inside the circulation pipe from the top side opening towards the bottom side opening along the path of the circulation pipe. Also, a steam supply pipe with an open/close valve is connected to the path of the circulation pipe.

Steam (fluid) supplied from the steam supply pipe is introduced to the circulation pipe via the open/close valve. Upon driving the turbo blower, air (fluid) inside the pressure vessel is suctioned from the top side opening of the pressure vessel and strongly agitated with steam inside the circulation pipe. Hence, it is supplied to the inside of the pressure vessel in a state with uniform temperature distributions and steam density from the bottom side opening of the pressure vessel.

Especially, at the early stage of introducing steam, fluid (steam and air) with a relatively high temperature stagnates in the upper portion inside the pressure vessel whereas fluid with a relatively low temperature stagnates in the lower portion of the pressure vessel. However, by a circulation mechanism comprising the circulation pipe and the turbo blower, the high - temperature fluid in the upper portion of the pressure vessel, that is, fluid with a high temperature, which has not consumed the heat for heat sterilization is forcedly supplied to the lower portion of the pressure vessel. Therefore, uniformity of the temperature distributions and steam density can be performed for an extremely short period of time.

As described, generation of cold spots which are partial air faults can be prevented and the atmosphere inside the pressure vessel can be surely uniformed. Hence, it becomes practically unnecessary to perform an air - blow step for letting out air inside the pressure vessel taking a long period of time.

Therefore, pressurizing and heating of articles can be started at the early stage of introducing steam. As a result, unnecessary energy consumption due to introduction of excessive amount of steam can be prevented in the air-blow step and, at the same time, the pressurizing and heating time required for sterilization of articles can be shortened.

Also, a partition panel having a number of slits or holes are provided may be provided inside the pressure vessel apart from the bottom of the pressure vessel; and a diffusion chamber may be provided between the partition panel and the bottom so as to introduce fluid supplied from the bottom side opening to the inside of the pressure vessel via the diffusion chamber.

With this configuration, fluid with a high temperature can be jetted uniformly from the bottom of the pressure vessel, which enables more high-level uniformity of the temperature distributions and steam density.

Furthermore, in the case where a processing of cooling articles is performed inside the pressure vessel, a pressurized air supply pipe with an open/close valve is connected to the pressure vessel and a cooling water jet unit for jetting cooling water is provided inside the pressure vessel. Also, as a structural element of the pressure heating apparatus, a sequence control system is to be provided. The sequence control system has a function of starting the operation of the cooling water jet unit in a state where the open/close valve of the steam supply pipe is closed and the open/close valve of the pressurized air supply pipe is opened after driving the turbo blower for a prescribed period of time by opening the open/close valve of the steam supply pipe.

With this configuration, the open/close valve of the pressurized air supply pipe is automatically opened after completing the pressurizing and heating processing and internal pressure of the pressure vessel is increased compared to that at the time of pressurizing and heating processing. Jetting of cooling water by the cooling water jet unit is started in a state where the internal pressure of the pressure vessel is increased. Therefore, if the steam inside the pressure vessel is abruptly cooled and condensed by the jetting of cooling water, there is no chance that the internal pressure of the pressure vessel becomes lower than the that of the boiling point. Thus, generation of damages such as ruptures of the exterior films of the retort pouches or package for autoclave can be prevented beforehand.

Furthermore, the turbo blower is positioned on the path of the circulation pipe near the top side opening and the steam supply pipe is connected to the circulation pipe between the turbo blower and the top side opening. Also, it is desirable that the section between the open/close valve of the steam supply pipe and the connection between the circulation pipe be shared as a part of the pressurized air supply pipe and the open/close valve of the pressurized air supply pipe be provided in the upper side than the shared-use portion.

As described, by positioning the turbo blower near the top side opening, the turbo blower can be protected from water which enters inside the circulation pipe. Also, by connecting the steam supply pipe to the circulation pipe between the turbo blower and the top side opening, agitation of air (fluid) inside the pressure vessel and steam (fluid) supplied from the steam supply pipe can be more surely performed. The reason is that air and steam strongly agitated by the turbo blower is supplied to the bottom side opening of the pressure vessel. Moreover, through sharing the section between the open/close valve of the steam supply pipe and the connection between the circulation pipe as a part of the pressurized air supply pipe, simplification of the piping in the periphery of the pressure vessel and saving of resources can be achieved.

### BRIEF DESCRIPTION OF THE DRAWINGS

Fig. 1 is a side cross sectional view showing a pressure vessel and a peripheral configuration thereof of pressure heating apparatus according to an embodiment utilizing present invention is applied;
Fig. 2 is a front cross sectional view of the pressure vessel according to the embodiment in Fig. 1;
Fig. 3A is a perspective view showing an example of the configuration of a partition panel to which slits are formed;
Fig. 3B is a perspective view showing an example of the configuration of a partition panel to which holes are formed;
Fig. 3C is a perspective view showing an example of the configuration of a cooling water jet unit;
Fig. 4 is a functional block diagram showing the approximate figure of a sequence control system forming a part of the pressure heating apparatus;
Fig. 5 is a flowchart showing an outline of the processing operation of the sequence control system of Fig. 4;
Fig. 6 is a continued flowchart showing the outline of the processing operation of the sequence control system of Fig. 5; and
Fig. 7 is a timing chart showing changes in the internal temperature and the internal pressure of the pressure vessel and the temperatures of the articles such as retort pouches, autoclaves, and canned foods.

### DETAILED DESCRIPTION OF THE PREFERRED EMBODIMENTS

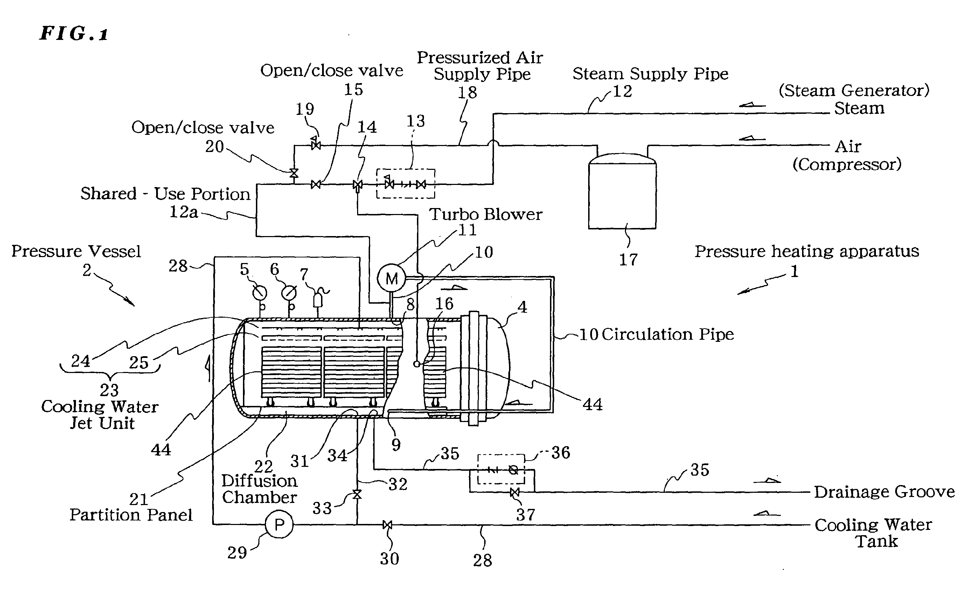

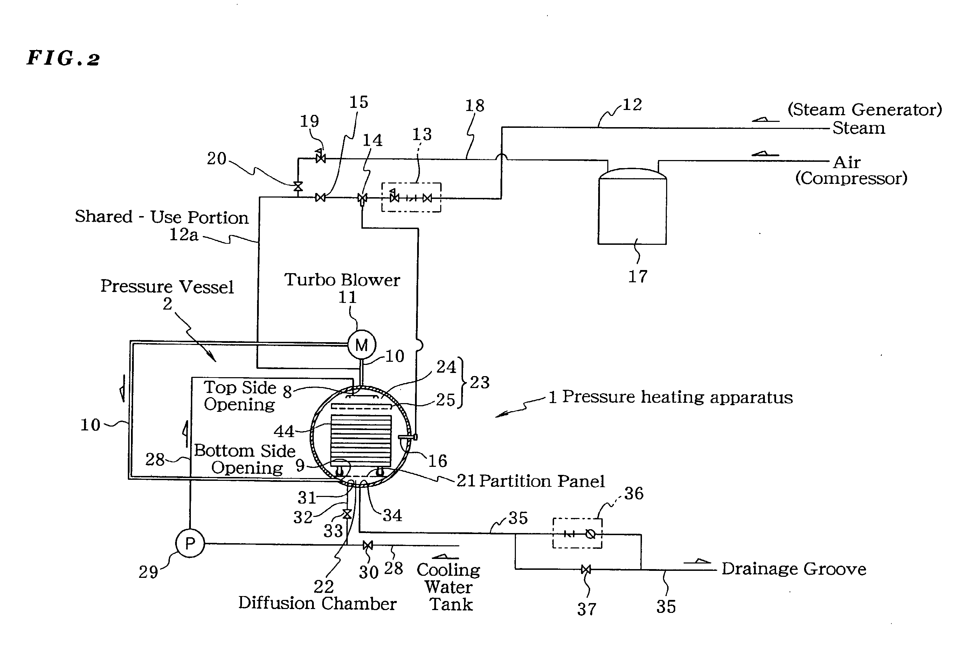

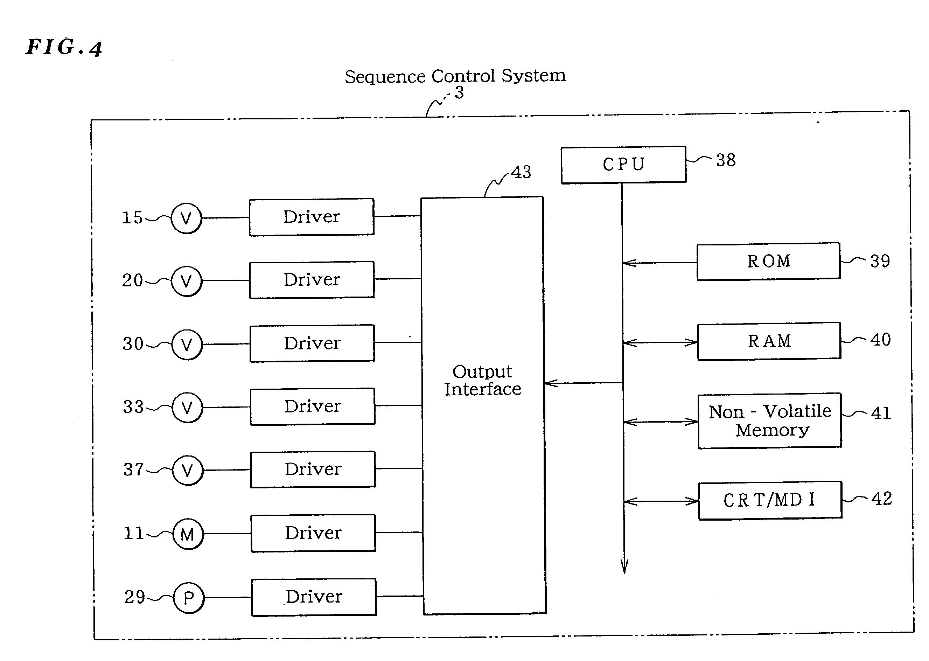

An embodiment of the present invention will be described in detail by referring to accompanying drawings hereinafter. FIG. 1 is a cross sectional view showing a side view of an approximate figure of a pressure vessel 2 and the peripheral configuration thereof in a pressure heating apparatus 1 according to an embodiment of the present invention and Fig. 2 is a cross sectional view showing a front view of the peripheral configuration of a pressure vessel 2 in the same embodiment. Also, the approximate figure of a sequence control system (sequencer) 3 for controlling each part of the pressure heating apparatus 1 is shown by a functional block diagram in FIG. 4.

The pressure vessel 2 is formed of a substantially cylindrical hollow body as shown in Fig. 1 and Fig. 2, and a pressure - resistant hatch 4 for taking in and out the articles to be sterilized such as retort pouches, package for autoclave, and canned foods is provided movable (open and close) on one end. There may be cases where the pressure-resistant hatch 4 is provided on both ends of the pressure vessel 2 depending on the form of production lines.

The pressure vessel 2 is equipped with a manometer 5 and a thermometer 6 for monitoring the internal pressure and temperatures. Also comprised is a safety valve (relief valve) 7 for preventing an abnormal increase in the internal pressure of the pressure vessel 2. All of these are elements well known to those skilled in the art.

Next, the distinct configuration of the pressure heating apparatus 1 according to the embodiment will be described in detail.

As shown in Fig. 1 and Fig. 2, a top side opening 8 is provided on the top face of the pressure vessel 2 while a bottom side opening 9 is provided on the bottom face of the pressure vessel 2. The top side opening 8 and the bottom side opening 9 are connected through a circulation pipe 10 provided outside the pressure vessel 2. Also, a turbo blower 11 is installed on the path of the circulation pipe 10 in the position closer to the top side opening 8. The turbo blower 11 is driven in such a direction that fluid (air and steam) inside the circulation pipe 10 is circulated from the top side opening 8 towards the bottom side opening 9 along the path of the circulation pipe 10.

A steam supply pipe 12 comprises a pressure reducing valve 13, a temperature control valve 14, and an open/close valve 15. The tip of the steam supply pipe 12 is connected to the circulation pipe 10 on the path of the circulation pipe 10 between the turbo blower 11 and the top side opening 8.

The temperature control valve 14 practically comprises a flow control valve, a differential amplifier and the like. The temperature control valve 14 first finds the temperature difference by comparing the steam temperature inside the pressure valve 2 detected by a temperature sensor 16 provided in the pressure vessel 2 and the target temperature set beforehand in the differential amplifier and the like, and then automatically controls the flow of steam supplied to the pressure vessel 2 by performing proportional control of the opening state of the flow control valve so that the temperature difference is reduced, so as to finally adjust the steam temperature inside the pressure vessel 2. In other words, if the temperature detected by the temperature sensor 16 is lower than the target temperature, the flow control valve is adjusted to be the open side in proportion to the temperature difference and, if the temperature detected by the temperature sensor 16 is higher than the target temperature, the flow control valve is adjusted to be the closing side in proportion to the temperature difference.

A pressurized air supply pipe 18 for introducing the pressurized air supplied from a pressurized air tank 17 to the pressure vessel 2 comprises a pressure reducing valve 19 for restricting air pressure and the open/close valve 20, and the tip is connected to the steam supply pipe 12 in the slightly down stream position than the open/close valve 15 of the steam supply pipe 12.

Hence, the section of the steam supply pipe 12 between the open/close valve 15 and the connection point to the circulation pipe 10 becomes a shared-use portion 12a serving as both the steam supply pipe 12 and the pressurized air supply pipe 18. An open/close valve 20 of the pressurized air supply pipe 18 is provided in the up stream side than the shared-use portion 12a. As described, by providing the steam supply pipe 12 and the pressurized air supply pipe 18 together by a single line near the pressure vessel 2, the piping structure in the periphery of the pressure vessel 2 can be simplified.

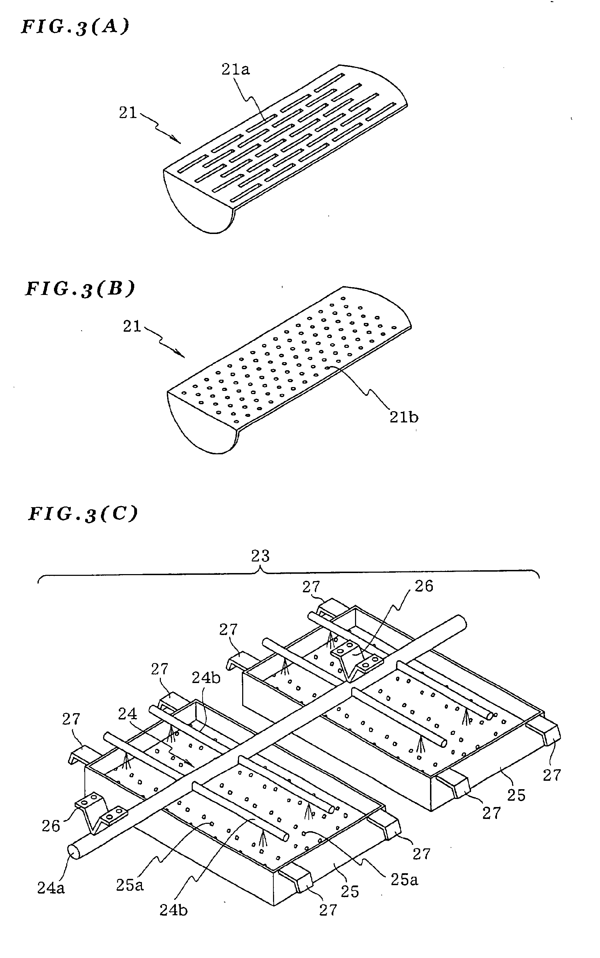

Inside the pressure vessel 2, a partition panel 21 having a number of slits or holes with prescribed intervals is fixed apart from the bottom of the pressure vessel 2 and a diffusion chamber 22 is formed between the partition panel 21 and the bottom of the pressure vessel 2. Examples of the configuration of the partition panel 21 are shown in Fig. 3A and Fig. 3B.

Fig. 3A shows an example where the partition panel 21 is provided by forming a number of slits 21a on a metal plate and Fig. 3B shows an example where the partition panel 21 is provided by forming number of holes 21b on a metal plate. In both cases, the area ratio of the opening portion of the silts 21a or the holes 21b against to cross section area of partition panel 21 is about 60 % in the direction perpendicular to the longitudinal direction of diffusion chamber 22.

The main part of a cooling water jet unit 23 for jetting cooling water to inside of the pressure vessel 2, as shown in Fig. 1 and Fig. 2, comprises a shower cooling pipe 24 fixed by being hung on the top face of the pressure vessel 2 and a cooling water dispersion plate 25 fixed under the shower cooling pipe 24 with prescribed intervals. An example of the configuration of the shower cooling pipe 24 and the cooling water dispersion plate 25 is shown in Fig. 3C.

The shower cooling pipe 24 comprises a main pipe 24a and a plurality of sub pipes 24b fixed orthogonal to the main pipe 24a. Cooling water introduced from the main pipe 24a through the sub pipes 24b is to be jetted like shower from nozzles (not shown) on both sides of the sub pipes 24b. The shower cooling pipe 24 is installed inside the top face of the pressure vessel 2 via a stay 26.

The cooling water dispersion plate 25 is formed by a rectangular plate with a number of holes 25a being provided on the bottom face, and cooling water jetted from the shower cooling pipe 24 is temporarily pooled therein. The pooled cooling water is dropped uniformly from a number of the holes 25a. The cooling water dispersion plate 25 is installed in the position under the shower cooling pipe 24 by fixing a stay 27 to the inner wall of the pressure vessel 2.

As shown in Fig. 1 and Fig. 2, a cooling water supply pipe 28 is connected to the shower cooling pipe 24. The cooling water pooled in a cooling water tank (not shown) is to be supplied to the shower cooling pipe 24 via an open/close valve 30 and a cooling water pump 29.

On the path of the cooling water supply pipe 28 between the cooling water pump 29 and the open/close valve 30, a cooling water recovery pipe 32 which connects to a cooling water recovery hole 31 provided in the bottom face of the pressure vessel 2 is connected via an open/close valve 33. Also, a drain hole 34 is provided in the bottom face of the pressure vessel 2 in parallel to the cooling water recovery hole 31. On the path of a drain pipe 35 connected to the drain hole 34, an auto drain 36 and an open/close valve 37 are placed in parallel to each other. The auto drain 36 is a valve for detecting water generated by condensation of steam and the like and for draining it automatically. Detailed description of the configuration and function is omitted since the auto drain 36 is well known to those skilled in the art.

In Fig. 1 and Fig. 2, numeral 44 denotes a truck for loading articles such as retort pouches, package for autoclave, and canned foods at once to the pressure vessel 2. In the truck 44, there are several shelves for placing the articles to be sterilized being provided in the vertical direction at prescribed intervals. In each shelf, a number of slits or holes are formed as in the same manner as that of the partition panel 21.

A sequence control system 3 for controlling each part of a pressure heating apparatus 1, as in the approximate figure shown in Fig. 4, comprises a CPU 38 for arithmetic processing, a ROM 39 for storing a control program, a RAM 40 used for temporarily storing arithmetic data, a non-volatile memory (or a hard disk) 41, a manual data input device 42 with display unit and an output interface 43. The electromagnetic relay type open/close valves 15, 20, 30, 33, 37, the turbo blower 11 and the cooling water pump 29 are connected to the output interface 43 to be capable of drive control.

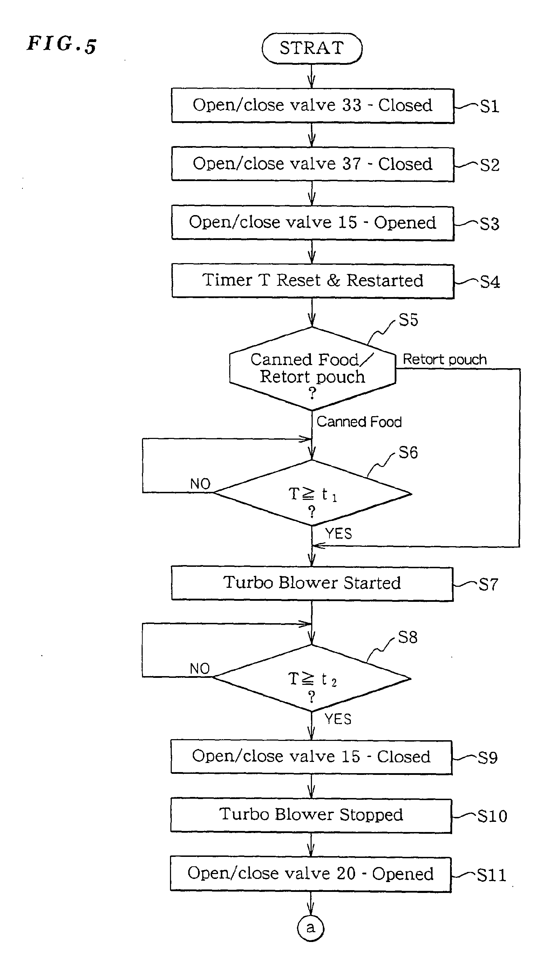

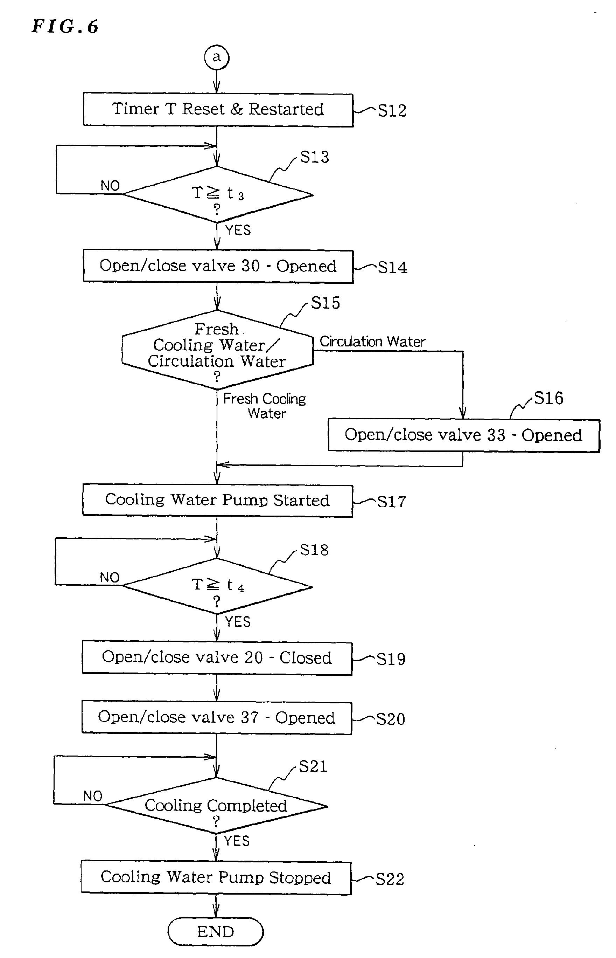

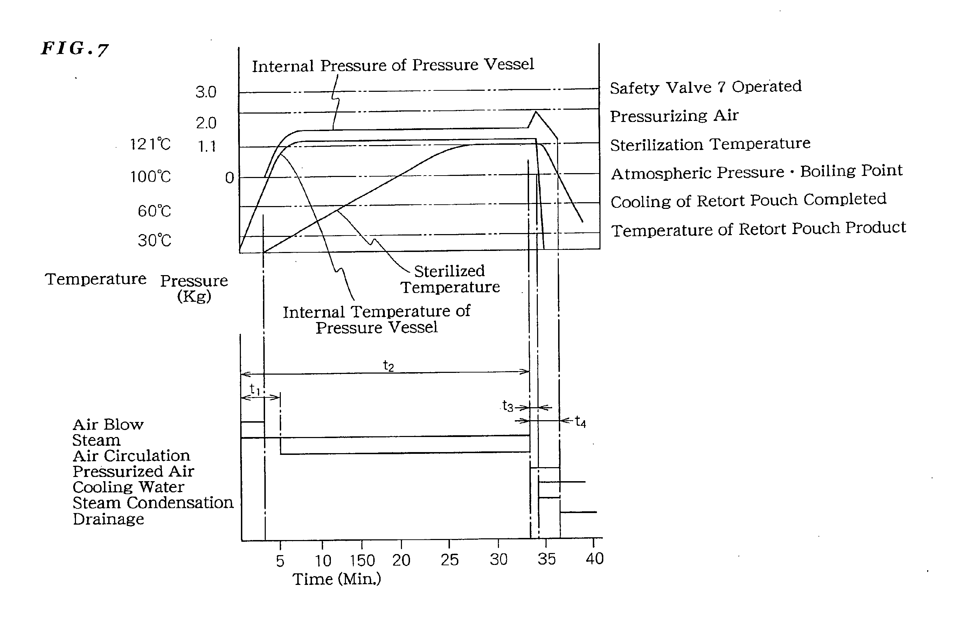

Next, the total operation of the pressure heating apparatus 1 according to the embodiment will be described by referring to flowcharts in Fig. 5 and Fig. 6 showing the approximate figure of the processing operation of the sequence control system 3 for controlling each part of the pressure heating apparatus 1, and a timing chart in Fig. 7 showing changes in the internal temperature and the internal pressure of the pressure vessel 2 and changes in the temperatures of the articles such as retort pouches, package for autoclave, and canned foods.

At this stage, the articles to be sterilized are already loaded inside the pressure vessel 2 and operation of a compressor for supplying air to the pressurized air tank 17 and a steam generator is started. Also, manual setting of pressure for the pressure reducing valves 13 and 19, and setting of the target value for the temperature control valve 14 are to be completed. The open/close valves 15, 20, 30 are at the initial state in the closed position and the turbo blower 11 and the cooling water pump 29 are at the initial state being stopped. However, it is possible that the open/close valve 37 is left opened due to the draining performed at the final stage of the pressurizing and heating. Also, the open/close valve 33 may be left opened in the case where cooling is performed by reusing the cooling water which has been already used at the cooling step of pressurizing and heating.

The sequence control system 3 upon starting the sequence control, first, outputs a closing command to the open/close valve 33 and the open/close valve 37 via the output interface 43 and a driver, and controls both valves to be in the closed position (step s1, step s2). The reason is that, as described above, the valves may be left open in the state at the time of completing the preceding operation of pressurizing and heating.

Subsequently, the sequence control system 3 introduces steam from the steam generator inside the circulation pipe 10 via the steam supply pipe 12, the pressure reducing valve 13, the temperature control valve 14, the open/close valve 15 and the shared-use portion 12a of the steam supply valve pipe 12 by outputting an opening command to the open/close valve 15 via the output interface 43 and the driver to open the open/close valve 15 (step s3). At the same time, the sequence control system 3 starts measurement of the time passed since the start of supplying the steam by resetting or restarting the timer (step s4) and judges whether the sterilization mode of the apparatus is set for canned foods or retort pouches (step s5).

The sterilization mode is set by the input operation by the manual data input device with display unit 42. However, at this point, one of either the modes for canned foods or retort pouches is selected and the selected result is stored in the nonvolatile memory 41.

As has been already mentioned, it is not necessary to have an air - blow step in the pressure heating apparatus 1 according to the embodiment. However, it is possible to perform an air - blow step for filling the pressure vessel 2 with steam at the first stage of the pressurizing and heating processing by setting the sterilization mode for canned food.

When it is judged by the judging processing in the step s5 that the sterilization mode is set for canned foods, the sequence control system 3 waits till the measurement time T of a timer for measuring the time passed from the time of starting steam supply reaches the required air-blow time t1 (the value set shorter than the required time of the related art) and during this time, steam supplied from the circulation pipe 10 fills inside the pressure vessel 2 via the top side opening 8 (step s6).

When it is judged by the judging processing in the step s5 that the sterilization mode is set for retort pouches, there is no need for performing an air - blow step. Thus, the sequence control system 3 skips the waiting processing in the step s6 and controls the turbo blower 11 to start the operation immediately (step s7).

At this time, the maximum pressure of the steam supplied to the pressure vessel 2 is limited by the pressure reducing valve 13, and within the range, the temperature control valve 14 controls the flow amount of the steam based on the correlation of temperature information from the temperature sensor 16 and the target temperature. Thereby the steam temperature inside the pressure vessel 2 is adjusted.

The internal temperature and internal pressure of the pressure vessel 2, as shown in Fig. 7, start to increase gradually, and slightly after this, temperatures of the articles to be sterilized, that is, the retort pouches, the package for autoclaves, or canned foods start to increase. Fig. 7 shows the case of performing an air-blow. In other words, it shows an example of an increase in the internal temperature in the case where the operation of the turbo blower 11 is started after the required air-blow time t1 has passed from the time of starting steam supply. The required air-blow time t1 is to be set with some extra time to an extent for the required time for filling the steam (3 minutes in the example shown in Fig. 7). Therefore, as shown in Fig. 7, the actual required time for filling becomes shorter than the required air-blow time t1, which is the waiting time before starting the operation of the turbo blower 11.

Subsequently, supply of the steam to the pressure vessel 2 and rotation of the turbo blower 11 are performed continuously for the prescribed pressurized and heating time t2 (set value) .

By the operation of the turbo blower 11, air inside the pressure vessel 2 and steam supplied via the steam supply pipe 12 are strongly agitated inside the circulation pipe 10. Therefore, the temperature distributions and steam density of the mixed fluid of air and steam supplied from the circulation pipe 10 to the diffusion chamber 22 via the bottom side opening 9 of the pressure vessel 2 are in a state which is extremely close to be uniform.

The mixed fluid of air and steam supplied to the diffusion chamber 22 as described is uniformly jetted from each part of the partition panel 21 through the slits 21a or the holes 21b of the partition panel 21 and rises from bottom to top inside the pressure vessel 2. During the process, the articles such as retort pouches, package for autoclaves, or canned foods placed on a plurality of shelves of the truck 44 are heated and sterilized.

Slits and holes like those of the partition panel 21 are formed on the shelves of the truck 44 so that there is no interruption of rise of the mixed flow by the shelves. Thus, the articles such as retort pouches, package for autoclaves, and canned foods placed in each shelf are uniformly heated and sterilized by stable steam without cold spots. Also, the pressure vessel 2 is a perfect sealed vessel and the inside is pressurized by steam containing latent heat. Therefore, heat sterilization can be performed at far higher temperatures than the boiling point of water under the standard atmospheric pressure. The articles such as retort pouches, package for autoclaves, and canned foods placed on the shelves are also pressurized by steam so that there is no risk that the outer films (wrapping) of the retort pouches or autoclaves are deformed or ruptured.

Especially, at the initial stage of introducing steam, the fluid of steam and air with relatively high temperatures stays in the upper portion of the pressure vessel 2 while the fluid of steam and air with relatively low temperature stays in the lower portion of the pressure vessel 2. However, the fluid with high temperature in the upper portion is forcedly transferred to the lower portion of the pressure vessel 2 by the circulation mechanism formed with the circulation pipe 10 and the turbo blower 11. Thus, it becomes possible to achieve uniformity of the temperature distributions and steam density for an extremely short period of time.

As a result, the air - blow time is shortened to 5 minutes or shorter, which otherwise requires about 10 to 20 minutes in the related art. Also, the air-blow time performed without the operation of the turbo blower 11 is shortened. Thereby, unnecessary consumption of energy due to introduction of excessive amount of steam at the air - blow step can be prevented and, at the same time, pressurizing and heating time required for the sterilization of the articles can be shortened.

Water generated by condensation of steam during the heat sterilization as described flows to the auto drain 36 via drain hole 34 and drain pipe 35 provided on the bottom face of the pressure vessel 2 and automatically drained to the drainage groove near the place where the apparatus is located.

When it is detected by the judging processing in the step s8 that the prescribed pressurizing and heating time t2 (set value) has passed, the sequence control system 3 outputs a closing command to the open/close valve 15 to stop the supply of steam and, at the same time, controls the turbo blower 11 to stop the rotation thereby to finish the steps of the heat sterilization (step s9, step s10).

Subsequently, the sequence control system 3, by outputting an opening command to the open/close valve 20 to open the opening valve 20, introduces the pressurized air from the pressurized air tank 17 inside the circulation pipe 10 via the pressurized air supply pipe 18, the pressure reducing valve 19, the open/close valve 20, and also the shared-use portion 12a of the steam supply pipe 12 which practically functions as the pressurized air supply pipe (step s11). At the same time, the sequence control system 3 starts the measurement of time passed from the start of pressurized air supply by resetting or restarting the timer (step s12), and waits until the measurement time T of the timer reaches a pressure waiting time t3 (set value).

The limit value set for the pressure reducing valve 19 is about twice the limit value set for the pressure reducing valve 13. Thereby, the internal pressure of the pressure vessel 2, as shown in Fig. 7, is adjusted to a far higher value compared to that in the pressurizing and heating step.

Upon confirming that the time passed from the start of pressurized air supply reaches the pressure waiting time t3 and therefore the internal pressure of the pressure vessel 2 has surely reached the set value (step s13), the sequence control system 3 outputs an opening command to the open/close valve 30 to open the open/close valve 30 and allows the pumping operation of cooling water by the cooling water pump 29 (step s14). Furthermore, the sequence control system 3 judges whether the cooling water supply mode of the apparatus is set for fresh cooling water or circulation cooling water (step s15).

The cooling water supply mode is set by the input operation by the manual data input device with display unit 42, however, at this point, either one of the modes for fresh cooling water or circulation cooling water is selected and the selected result is stored in the nonvolatile memory 41.

When it is judged by the judging processing in the step s15 that it is set for the circulation cooling water mode, the sequence control system 3 outputs the opening command to the open/close valve 33 to open the open/close valve 33 thereby allowing the cooling water pooled inside the pressure vessel 2 to be re - supplied to the cooling water pump 29 via the cooling water recovery pipe 32 (step s16). On the other hand, when it is judged that it is set for the fresh cooling water mode, the sequence control system 3 keeps the closing state of the open/close valve 33 as it is and prevents the cooling water pooled inside the pressure vessel 2 from entering the cooling water pump 29 via the cooling water recovery pipe 32.

Subsequently, the sequence control system 3 starts cooling of the articles to be sterilized such as retort pouches, package for autoclave, and canned foods (step s17) by outputting a drive command to the cooling water pump 29 to start the operation, through pumping up the cooling water from the cooling water tank via the cooling water supply pipe 28 and the open/close valve 30, and supplying the cooling water to the shower cooling pipe 24 as the cooling water jet unit to start the operation of jetting the cooling water inside the pressure vessel 2.

At this time, when it is set for the circulation cooling water mode, that is, when the open/close valve 33 is opened, the cooling water from the cooling water tank and the used cooling water recovered from the cooling water recovery pipe 32 are mixed to be fed to the cooling water pump 29. On the contrary, when it is set for the fresh cooling water mode, that is, when the open/close valve 33 is closed, only the cooling water from the cooling tank is to be fed to the cooling water pump 29.

At the point of starting jetting of cooling water, there is steam remained inside the pressure vessel 2 so that the volume of the remained steam is abruptly cooled and condensed to be shrunk at once by jetting of the cooling water. However, as has been already mentioned, inside the pressure vessel 2 is pressurized by far higher pressure compared to that at the time of pressurizing and heating. Therefore, even in the case where the volume is reduced by condensation of the steam, as shown in Fig. 7, there is no way that the internal pressure of the pressure vessel 2 becomes lower than the internal pressure at the time of pressurizing and heating. Thus, there is no need to concern about deformation or rupture of the outer films (wrapping) of the retort pouches or package for autoclave.

Subsequently, pressurizing of the pressure vessel 2 by opening the switch valve 20 is continued for a prescribed pressurizing time t4 (set value), and during this time, as shown in Fig. 7, reduction of volume by condensation of the steam (steam condensation) is completely finished. After the reduction of the volume by the condensation of steam is completed, there is no risk that the outer films (wrapping) of the retort pouches or package for autoclave is deformed or ruptured by a decrease in the atmospheric pressure.

Therefore, the sequence control system 3 outputs a closing command to the open/close valve 20 to stop supply pressurized air to the pressure vessel 2 (step s19) upon confirming that the pressurizing time t4 has passed by the judging processing in the step s18. At the same time, the sequence control system 3 starts processing of draining the cooling water inside the pressure vessel 2 via the drain hole 34, the drain pipe 35 and the open/close valve 37 (step s20) by outputting an opening command to the open/close valve 37 to open the open/close valve 37.

During this time, the cooling water pump 29 is still continuously driven and the cooling water is jetted from the shower cooling pipe 24 as the cooling water jet unit. The turbo blower 11 is installed on the path of the circulation pipe 10 in the position closer to the top side opening 8. Therefore, there is no need to concern about the damages on the turbo blower 11 even if the cooling water enters the circulation pipe 10.

Finally, when it is judged by the judging processing in a step s21 that the amount of jetted water from the shower cooling pipe 24 has reached the set value and the constant amount flowing signal from the water level sensor provided in the cooling water tank is detected indicating the completion of cooling the articles, the sequence control system 3 finishes the processing of the cooling step by stopping the operation of the cooling water pump 29 (step s22).

As shown in Fig. 7, the open/close valve 37 is kept in the opened state as it is, and the cooling water pooled in the pressure vessel 2 is completely drained to the last drop via the drain hole 34, the drain pipe 35, and the open/close valve 37.

The operation of the sequence control system 3 has been described by referring to an example in which, after opening the switch valve 15 of the steam supply pipe 12 and driving the turbo blower 11 for a prescribed length of time, the operation of the shower cooling pipe 24 as the cooling water jet unit is started in the state where the open/close valve 15 of the steam supply pipe 12 and the open/close valve 20 of the pressurized air supply pipe 18 are opened. If necessary, it is possible for users to change the set values of the required air-blow time t1, the pressurizing and heating time t2, the pressurizing waiting time t3, the pressurizing time t4 and the like at will by the setting operation by the manual data input device with display unit 42.

Also, the sequence control regarding the drive control of the each part of the pressure vessel 2 can be freely designed as long as the pressure vessel 2 is surely pressurized by the pressurized air during the time of transition from the pressurizing and heating step using steam to the cooling step by jetting the cooling water.

The pressure heating apparatus according to the present invention is formed to comprise a circulation pipe outside the pressure vessel for connecting a top side opening provided on the upper portion of the pressure vessel and a bottom side opening provided on the lower portion of the pressure vessel and a turbo blower to which a steam supply pipe is connected is provided on a path of the circulation pipe. Therefore, the air inside the pressure vessel and the steam supplied to the circulation pipe can be strongly agitated so that uniformity of the temperature distributions and the steam density can be achieved.

Thus, it becomes possible to achieve uniformity of the temperature distributions and the steam density for an extremely short period of time and generation of cold spots which are partial air faults can be prevented. As a result, the atmosphere inside the pressure vessel can be surely uniformed so that it becomes practically unnecessary to have an air-blow step for letting out the air inside the pressure vessel taking a long period of time.

Consequently, the articles can be pressurized and heated at the initial stage of starting introduction of the steam. Thereby, unnecessary consumption of energy by introducing excessive amount of steam in the air - blow step can be prevented and, at the same time, the pressurizing and heating time required for sterilization of the articles can be shortened.

Furthermore, a partition panel having a number of slits or holes with prescribed intervals is provided inside the pressure vessel and a diffusion chamber is provided between the partition panel and the bottom so as to introduce fluid supplied from the bottom side opening inside the pressure vessel via the diffusion chamber. Therefore, fluid with a high temperature can be uniformly jetted from the bottom of the pressure vessel. Thereby, a high - level uniformity of the temperature distributions and the steam density inside the pressure vessel can be achieved.

Moreover, by providing a sequence control system, jetting of the cooling water by the cooling water jet unit is to be started after increasing the atmospheric pressure inside the pressure vessel after the completion of pressurizing and heating processing. Therefore, there is no way that the atmospheric pressure inside the pressure vessel becomes the reduced pressure even if the steam inside the pressure vessel is abruptly cooled and condensed. Hence, damages such as rupture of the outer films of retort pouches and package for autoclaves can be surely prevented.

In addition, the turbo blower is positioned near the top side opening and the section between the open/close valve of the steam supply pipe and the connection point with the circulation pipe is shared as a part of the pressurized air supply pipe. Therefore, the turbo blower can be protected from water which enters inside the circulation pipe and, at the same time, simplification of the piping in the periphery of the pressure vessel and saving of resources can be achieved.

The invention may be embodied in other specific forms without departing from the spirit or essential characteristic thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

The entire disclosure of Japanese Patent Application No. 2001-249086 (Filed on August 20, 2001) including specification, claims, drawings and summary are incorporated herein by reference in its entirety.

## Claims

1. A pressure heating apparatus for pressurizing and heating an article by filling a pressure vessel with steam containing a latent heat, comprising:
a circulation pipe being provided outside the pressure vessel for connecting a top side opening provided on the upper portion of the pressure vessel and a bottom side opening provided on the lower portion of the pressure vessel; on a path of the circulation pipe, a turbo blower for circulating fluid inside the pressure vessel and fluid inside the circulation pipe from the top side opening towards the bottom side opening along the path of the circulation pipe; and a steam supply pipe with an open/close valve being connected to the path of the circulation pipe.

2. The pressure heating apparatus as claimed in claim 1, wherein: a partition panel having a number of slits or holes with prescribed intervals is provided inside the pressure vessel apart from the bottom of the pressure vessel; and a diffusion chamber is provided between the partition panel and the bottom so as to introduce fluid supplied from the bottom side opening to the inside of the pressure vessel via the diffusion chamber.

3. The pressure heating apparatus as claimed in claim 1 or 2, further comprising: a pressurized air supply pipe with an open/close valve being connected to the pressure vessel; a cooling water jet unit for jetting cooling water inside of the pressure vessel; and
a sequence control system for starting the operation of the cooling water jet unit in a state where the open/close valve of the steam supply pipe is closed and the open/close valve of the pressurized air supply pipe is opened after driving the turbo blower for a prescribed period of time by opening the open/close valve of the steam supply pipe.

4. The pressure heating apparatus as claimed in claim 3, wherein: the turbo blower is positioned on the path of the circulation pipe near the top side opening; the steam supply pipe is connected to the circulation pipe between the turbo blower and the top side opening; the section between the open/close valve of the steam supply pipe and the connection point with the circulation pipe is shared as a part of the pressurized air supply pipe; and the open/close valve of the pressurized air supply pipe is provided in the up stream side than the shared-use portion.
